# EUROPÄISCHE PATENTSCHRIFT

(11) **EP 1 038 706 B1**
(45) Veröffentlichungstag und Bekanntmachung des Hinweises auf die Patenterteilung: **07.07.2004**
(21) Anmeldenummer: 00104247.2
(22) Anmeldetag: 02.03.2000
(51) Int. Cl.: B60J 1/18

(54) **Cabriolet-Fahrzeug**
Convertible vehicle
Véhicule cabriolet

(30) Priorität: 19.03.1999 DE 19912357
(43) Veröffentlichungstag der Anmeldung: 27.09.2000
(73) Patentinhaber: Wilhelm Karmann GmbH, D-49084 Osnabrück (DE)
(72) Erfinder: Maass, Joachim, 49143 Bissendorf (DE); Lehnig, Frank, 49086 Osnabrück (DE)
(74) Vertreter: Busse & Busse Patentanwälte

(56) Entgegenhaltungen:
- DE-A- 19 706 418
- GB-A- 918 909
- US-A- 3 188 135

## Beschreibung

Die Erfindung bezieht sich auf ein Cabriolet-Fahrzeug mit einer Heckscheibe nach dem Oberbegriff des Anspruchs 1.

Es sind Cabriolet-Fahrzeuge bekannt, bei denen die Heckscheibe während des Öffnens oder Schließens des Daches nach vorne verlagert wird, um hierdurch ein Aufschwenken von einem oder mehreren hinteren Spannbügeln zu ermöglichen, die im geschlossenen Zustand das Dach gegen die Karosserie verspannen und beispielsweise auf einem Verdeckkastendeckel aufliegen können, so daß die Aufschwenkung der Spannbügel Voraussetzung für die Ablegbarkeit des Daches ist. Bei der Vorwärtsverlagerung der Heckscheibe während des Öffnens oder Schließens des Daches kann ein Kontakt von insbesondere hinteren Insassen oder von festen Hindernissen, wie etwa hinteren Kopfstützen oder Überrollbügeln, mit der Heckscheibe nicht ausgeschlossen werden. Ein gattungsgemäßes Cabriolet-Fahrzeug ist aus Dokument GB 918 909 bekannt.

Der Erfindung liegt das Problem zugrunde, diesen Nachteil zu beseitigen.

Die Erfindung löst dieses Problem mit den kennzeichnenden Merkmalen des Anspruchs 1. Hinsichtlich weiterer vorteilhafter Ausgestaltungen wird auf die Ansprüche 2 bis 11 verwiesen.

Durch die erfindungsgemäße Ausbildung eines Cabriolet-Fahrzeugs kann während des Öffnens oder Schließens des Daches die Vorwärtsverlagerung des die Heckscheibe umfassenden hinteren Verdeckbereiches trotz eventueller Hindernisse stattfinden, da die Heckscheibe gegenüber dem Rahmen, der sie in das Verdeck einbindet, aufschwenkbar ist. Dadurch kann der Rahmen seitlich und oberhalb die Hindernisse passieren, ohne mit diesen zu kollidieren. Die Kollision der Heckscheibe mit den genannten Hindernissen wird durch das Aufschwenken vermieden.

Wenn die Aufschwenkung der Heckscheibe mit dem Öffnungs- oder Schließmechanismus des Daches zwangsgekoppelt ist, ist eine Kollision auch ohne Bedienung einer zusätzlichen Steuereinheit für das Aufschwenken verhindert. Der Benutzer muß dann keine weiteren Schritte neben der manuellen oder automatischen Öffnung bzw. dem Verschließen des Daches durchführen.

Wenn besonders vorteilhaft eine Schwenkhebelanordnung zur Aufschwenkung der Heckscheibe vorgesehen ist, kann diese auch unabhängig von der Öffnung oder dem Verschließen des Daches betätigt werden, so daß die Heckscheibe bei geschlossenem Dach in eine Belüftungsstellung aufgeschwenkt werden kann.

Wenn die Heckscheibe zusätzlich in der Karosserie absenkbar ist, ergibt sich alternativ auch diese Möglichkeit der Herbeiführung einer Belüftungsstellung, wobei bei geöffnetem Dach die Heckscheibe dann ebenfalls als Bestandteil des Daches mit im rückwärtigen Fahrzeugbereich abgelegt wird.

Bei einer im wesentlichen vertikalen Stellung der Heckscheibe ergibt sich eine besonders gute Sicht nach hinten. Durch die Lagerung der Heckscheibe in einem starren Rahmen kann diese als Glasscheibe mit Heizdrähten oder einer Antenne ausgebildet sein.

Weitere Vorteile und Merkmale ergeben sich aus in der Zeichnung dargestellten und nachfolgend beschriebenen Ausführungsbeispielen des Gegenstandes der Erfindung.

In der Zeichnung zeigt:

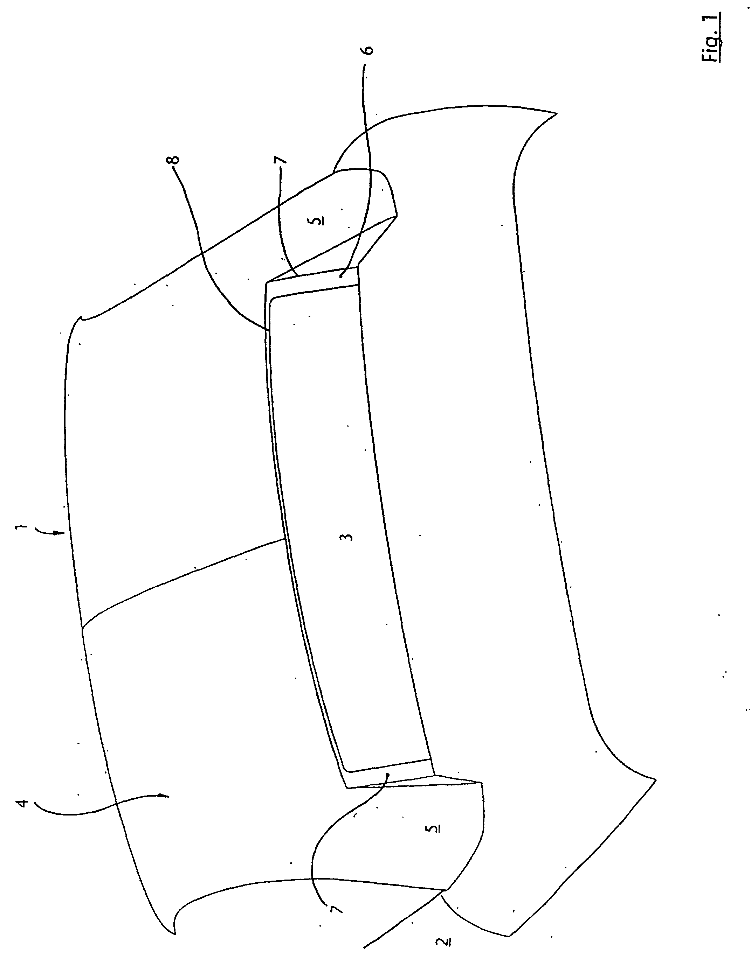

- Fig. 1: eine perspektivische, schematisierte Teilheckansicht eines erfindungsgemäßen Cabriolet-Fahrzeugs,
- Fig. 2: eine schematisierte Seitenansicht des rückwärtigen Fahrzeugbereiches bei in Normalstellung befindlicher Heckscheibe,
- Fig. 2a: einen Schnitt entlang der Linie IIa-IIa in Fig. 2,
- Fig. 2b: einen Schnitt entlang der Linie IIb-IIb in Fig. 2,
- Fig. 3: eine ähnliche Ansicht wie Fig. 2 während des Öffnens des Daches,
- Fig. 4: eine ähnliche Ansicht wie Fig. 3 bei weiterem Fortschreiten der Dachöffnung,
- Fig. 5: den rückwärtigen Fahrzeugbereich bei vollständig abgelegtem Dach,
- Fig. 6: eine ähnliche Ansicht wie Fig. 2 bei teilweise in Belüftungsstellung aufgeschwenkter Heckscheibe,
- Fig. 7: eine ähnliche Ansicht wie Fig. 6 bei vollständig in Belüftungsstellung aufgeschwenkter Heckscheibe,
- Fig. 8: eine ähnliche Ansicht wie Fig. 7 bei parallel stehender und teilweise abgesenkter Heckscheibe,
- Fig. 9: eine ähnliche Ansicht wie Fig. 8 bei vollständig abgesenkter Heckscheibe,
- Fig. 10: eine ähnliche Ansicht wie Fig. 9 einer alternativen Ausführungsform.

Ein erfindungsgemäßes Kraftfahrzeug 1 ist als Cabriolet-Fahrzeug ausgebildet und weist ein auffaltbares, im rückwärtigen Fahrzeugbereich einer Karosserie 2 ablegbares Dach 4 auf, das mit einer Heckscheibe 3 versehen ist, die dem Dach 4 zugeordnet und bei dessen Öffnen oder Schließen mit diesem beweglich ist.

Im vorliegenden Ausführungsbeispiel weist das Cabriolet-Fahrzeug 1 ein Dach 4 mit einer textilen Bespannung auf, das in seinem rückwärtigen Bereich zwei seitliche, nach hinten vorstehende und in Draufsicht im wesentlichen dreiecksförmige Endbereiche 5 umfaßt, denen die Heckscheibe 3 vorgelagert und zwischengelagert ist. Dadurch kann die Heckscheibe 3 in einer annähernd vertikalen Stellung gehalten werden, was eine sehr gute Sicht nach hinten sicherstellt. Ein erfindungsgemäßes Cabriolet-Fahrzeug kann auch eine schräg stehende Heckscheibe in einem üblichen, mit einem Spannbügel versehenen Endbereich eines Daches aufweisen.

Die Heckscheibe 3 ist in einem U-förmigen, nach unten offenen Rahmen 6 gehalten, der zwei kurze Seitenschenkel 7 sowie einen langen oberen Querschenkel 8 umfaßt.

Die Heckscheibe 3 ist gegenüber dem sie einfassenden Rahmen 6 im oberen Bereich angelenkt, dadurch im unteren Bereich öffnend schwenkbar in Richtung des Pfeils 34 gelagert. Für die Schwenkbarkeit der Heckscheibe 3 ist im Querschenkel 8 des Rahmens 6 eine Schwenkachse 32 vorgesehen, um die herum die Heckscheibe 3 in Richtung des Pfeils 34 aufgeschwenkt werden kann und hierbei entlang einer Trennungsebene 35 von einer Anpreßdichtung 36 abhebt. Der Verdeckstoff 33 des Daches 4 ist um einen Teil des Querschenkels 8 des Rahmens 6 herum gezogen und durch eine Dichtung 37 gegenüber der Heckscheibe 3 abgedichtet. Diese Dichtung 37 ist flexibel, so daß sie sowohl bei geschlossener als auch bei aufgeschwenkter Heckscheibe 3 wirksam ist.

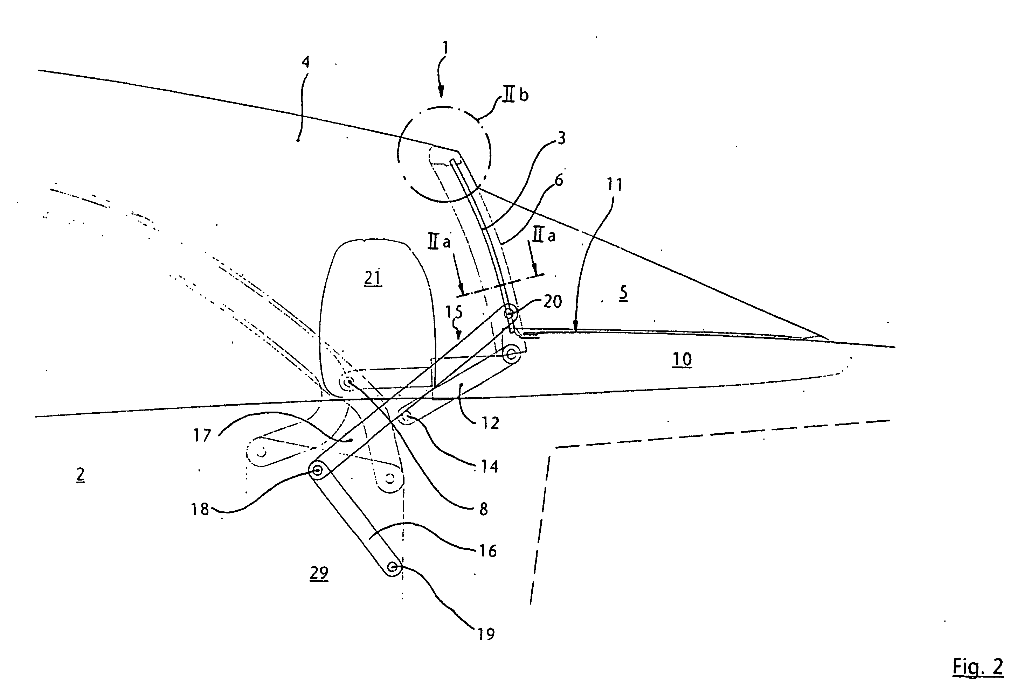

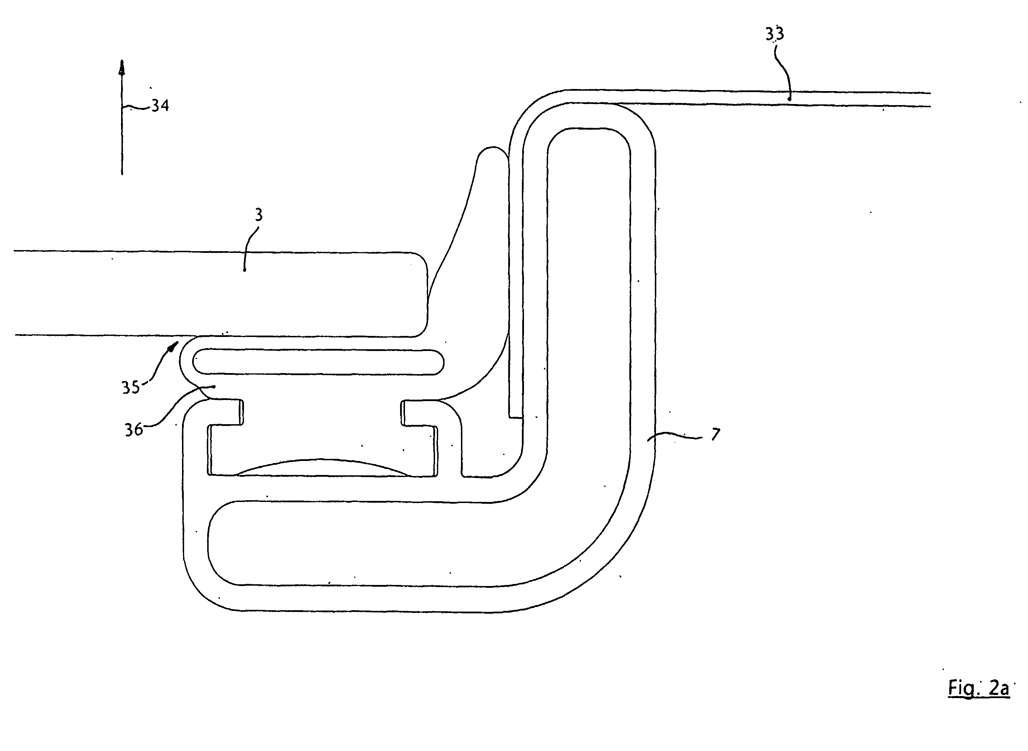

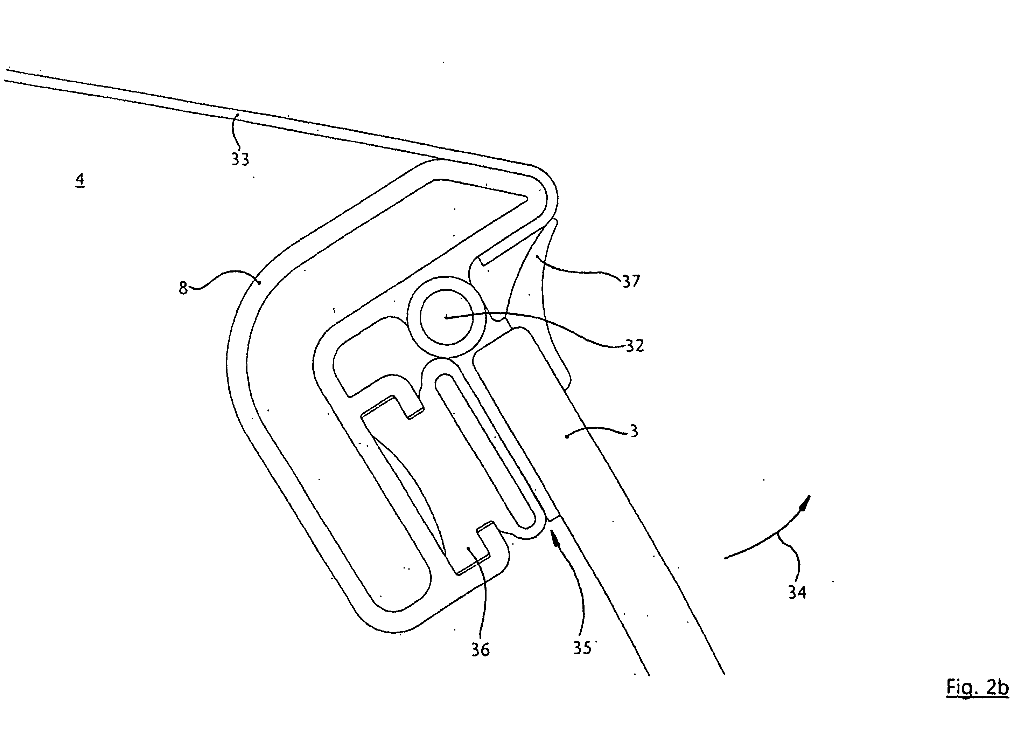

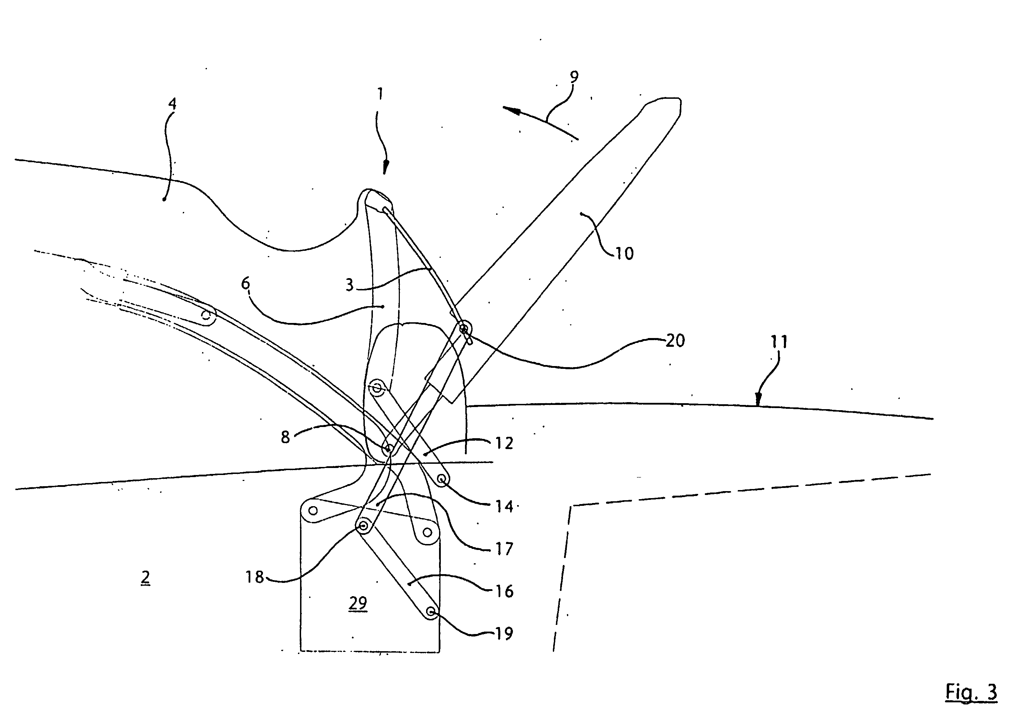

In Fig. 2 ist das Dach 4 in geschlossener Stellung gezeigt, die hinteren Dachbereiche 5 sind hierbei über Spannbügel 10 gegenüber einem nicht eingezeichneten Verdeckkastendeckel vorgespannt. Die Spannbügel 10 liegen hierzu in nahezu horizontaler Stellung. Während der in Fig. 3 bis Fig. 5 gezeigten Öffnung des Daches 4 werden zunächst die Spannbügel, die hier als Finnen 10 ausgebildet sind, um die Schwenkachse 8 aufwärts und nach vorne in Richtung des Pfeils 9 verschwenkt, wodurch das hier gezeigte textile Verdeck 4 seine Spannung verliert. Weiterhin wird der Rahmen 6, der die Heckscheibe 3 trägt und in geschlossener Stellung auf der Karosserie 2 im Bereich der Ebene der Fensterbrüstung 11 aufsteht, während des Aufwärtsverschwenkens der Spannbügel 10 mit seinem unteren Ende auf einer Kreisbahn 13 um die Schwenkachse 14 des Hebels 12 vorwärtsverlagert. Der Rahmen 6 wird dabei mit seinen seitlichen Schenkeln 7 an eventuellen Hindernissen, wie etwa Kopfstützen 21 oder Überrollbügeln oder den Köpfen den hinteren Insassen, seitlich vorbeigeführt, wohingegen der obere Querschenkel 8 oberhalb dieser Hindernisse geführt wird und auch insofern keine Kollisionsgefahr mit den genannten Hindernissen ausbildet. Um eine Kollision der im Rahmen 6 gehaltenen Heckscheibe 3 zu vermeiden, wird diese während des Öffnens oder Schließens des Verdecks 4 durch eine Schwenkhebelanordnung 15 gegenüber dem Rahmen 6 aufgeschwenkt. Die Schwenkhebelanordnung 15 umfaßt dabei zwei Hebel 16 und 17, die über ein Gelenk 18 miteinander gekoppelt sind. Der Hebel 16 verbindet eine karosseriefeste Schwenkachse 19, die im Bereich des Hauptlagers 29 angeordnet ist, mit dem beweglichen Gelenk 18, von dem aus sich der Schwenkhebel 17 zur Anlenkachse 20 erstreckt, die im unteren Bereich der Heckscheibe 3 angreift. Zur Bewirkung der Schwenkbewegung der Schwenkhebelanordnung 15 können bekannte Antriebselemente, etwa hydraulische oder elektrische, vorgesehen sein. Durch die Bewegung der Schwenkhebelanordnung 15 wird die Heckscheibe 3 in einem sich während der Dachöffnung vergrößernden Winkel α gegenüber dem Rahmen 6 aufgeschwenkt, so daß während der Vorbeiführung des Rahmens 6 um bzw. über die Hindernisse, wie etwa die Kopfstütze 21, die Heckscheibe 3 eine der horizontalen angenäherte Lage einnimmt, um dadurch über diese Hindernisse hinweggeführt werden zu können.

Für die Verlagerung des Rahmens 6 kann ein eigener Antrieb Verwendung finden, alternativ ist besonders vorteilhaft auch möglich, durch die Schwenkbewegung der Spannbügel 10 und die daraus resultierende Faltungskinematik des Daches 4 die Verlagerung des Rahmens 6 zwangsweise zu bewirken, so daß gesonderte Antriebs- oder Steuerungselemente entbehrlich sind.

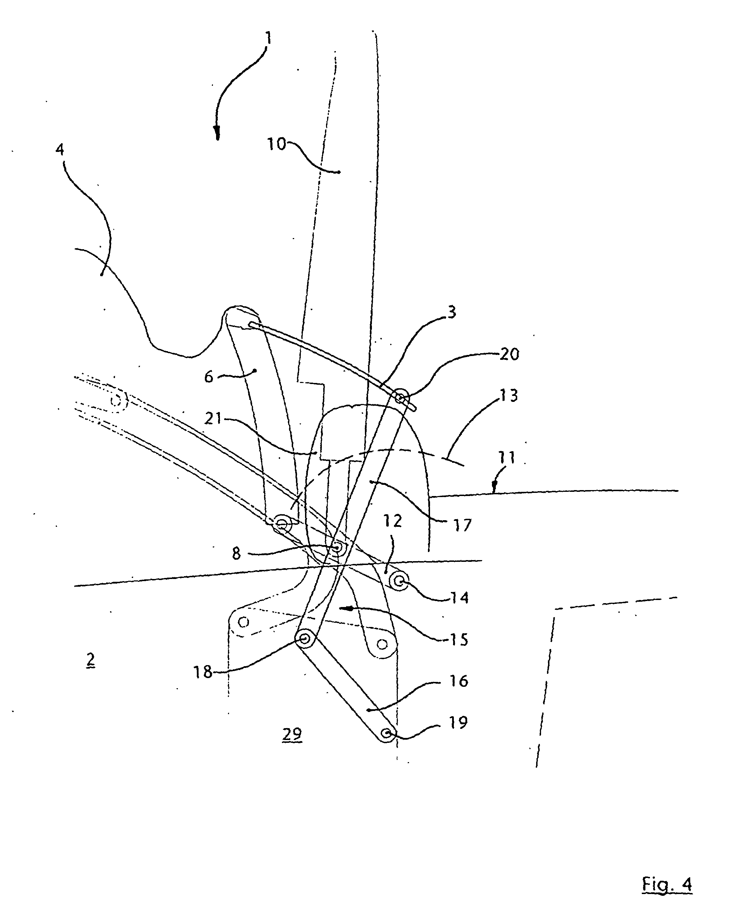

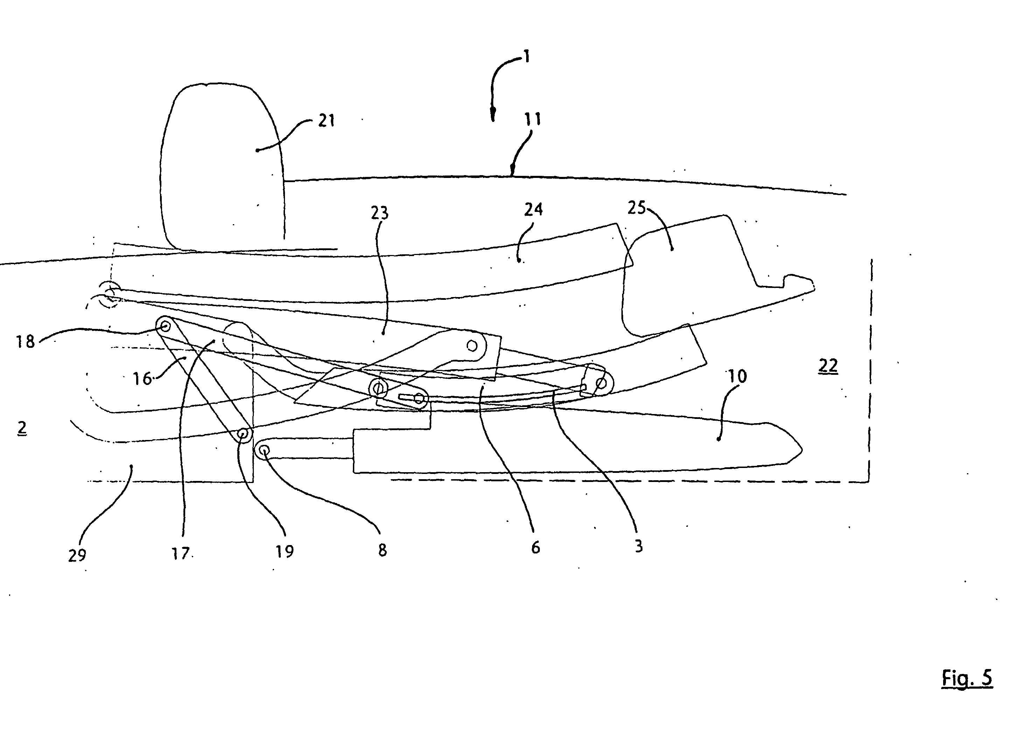

In der Stellung nach Fig. 4 kann ein rückwärtig angelenkter Verdeckkastendeckel (nicht eingezeichnet) aufgeschwenkt werden, um dadurch das Ablegen des Verdecks 4 in einem Verdeckkasten 22 zu ermöglichen. Die abgelegte Stellung des Daches 4 ist in Fig. 5 dargestellt. Hierbei sind die Finnen 10 um die Schwenkachsen 8, die während der Bewegung abwärts geführt werden, im wesentlichen horizontal in den Bodenbereich des Verdeckkastens 22 eingelegt, die Heckscheibe 3 ist gegenüber dem Rahmen 6 wieder eingeschwenkt, so daß eine Parallellagerung der Teile stattfindet und der Winkel α auf 0 zurückgeführt ist. Die Heckscheibe 3 nimmt in dieser abgelegten Stellung des Daches 4 keinen über den Raumbedarf des Rahmens 6 hinausgehenden Raum ein. Die Rückschwenkung der Heckscheibe 3 gegenüber dem Rahmen 6 wird durch gekoppelte Schwenkbewegungen der Hebel 12 um die Achse 14 und der Schwenkhebelanordnung 15 um die Achsen 18 und 19 bewirkt. Der Rahmen 6 mit der Heckscheibe 3 liegt dann im wesentlichen parallel oberhalb der Finnen 10. Oberhalb dieses Rahmens 6 liegen ein mittlerer Dachteil 23 und ein vorderer Dachteil 24, der sich mit seinem vorderen Endbereich 25 in geschlossener Stellung des Daches 4 auf einem Windschutzscheibenrahmen abstützt. Das Dach 4 ist daher insgesamt Z-förmig in den Verdeckkasten 22 eingefaltet.

Die Heckscheibe 3 ist in dieser eingefalteten Stellung ebenso gehalten, als ob sie nicht separat schwenkbar wäre, d.h. sowohl hinsichtlich der Platzverhältnisse als auch hinsichtlich der Beschädigungsempfindlichkeit in abgelegter Stellung sind keine Nachteile geschaffen. Das Schließen des Daches 4 verläuft dem Öffnen entsprechend mit gleicher Aufschwenkbewegung der Heckscheibe 3 und ist der umgekehrten Betrachtung der Fig. 5 bis Fig. 3 entnehmbar.

Eine besonders vorteilhafte Ausführung sieht vor, daß eine Zwangskopplung zwischen dem Aufschwenken und Zurückschwenken der Heckscheibe 3 einerseits und der Öffnungs- oder Schließbewegung des Daches 4 andererseits stattfindet, so daß eine Fehlbedienung etwa des Schwenkmechanismus während der Dachöffnung bzw. ein Vergessen des Aufschwenkens der Heckscheibe 3 verhindert ist. Diese Zwangskopplung kann beispielsweise mechanisch über geeignete Hebel erfolgen, bei denen das Aufschwenken der Finnen 10 gleichzeitig die Schwenkhebelanordnung 15 steuert, oder es kann eine Auswerteelektronik vorgesehen sein, die den jeweiligen Bewegungszustand des Daches 4 detektiert.

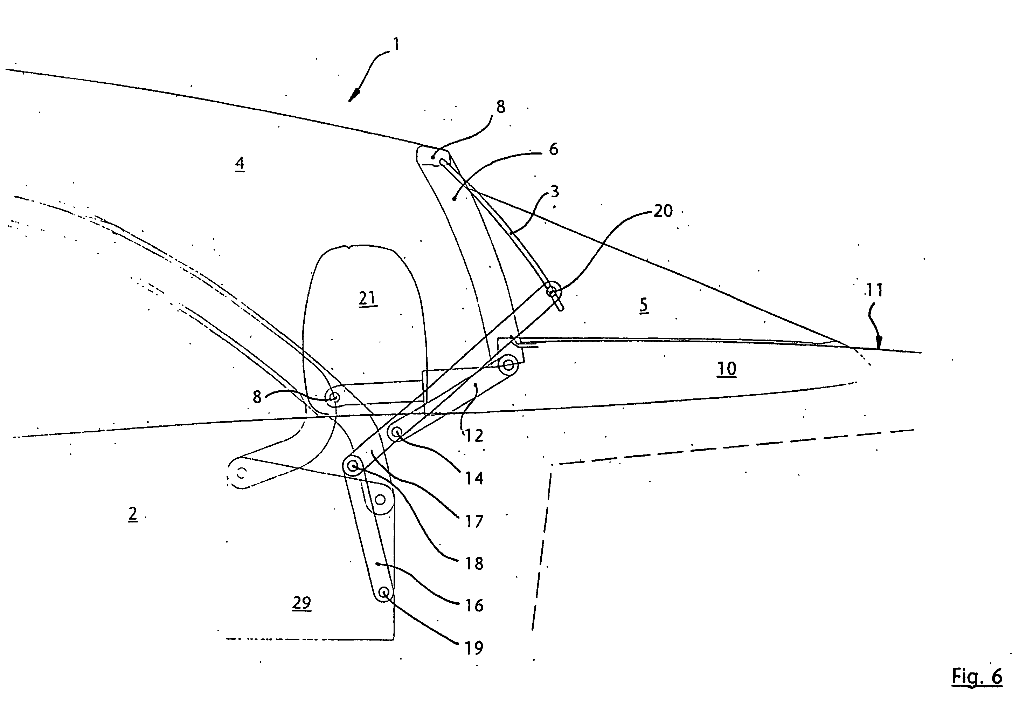

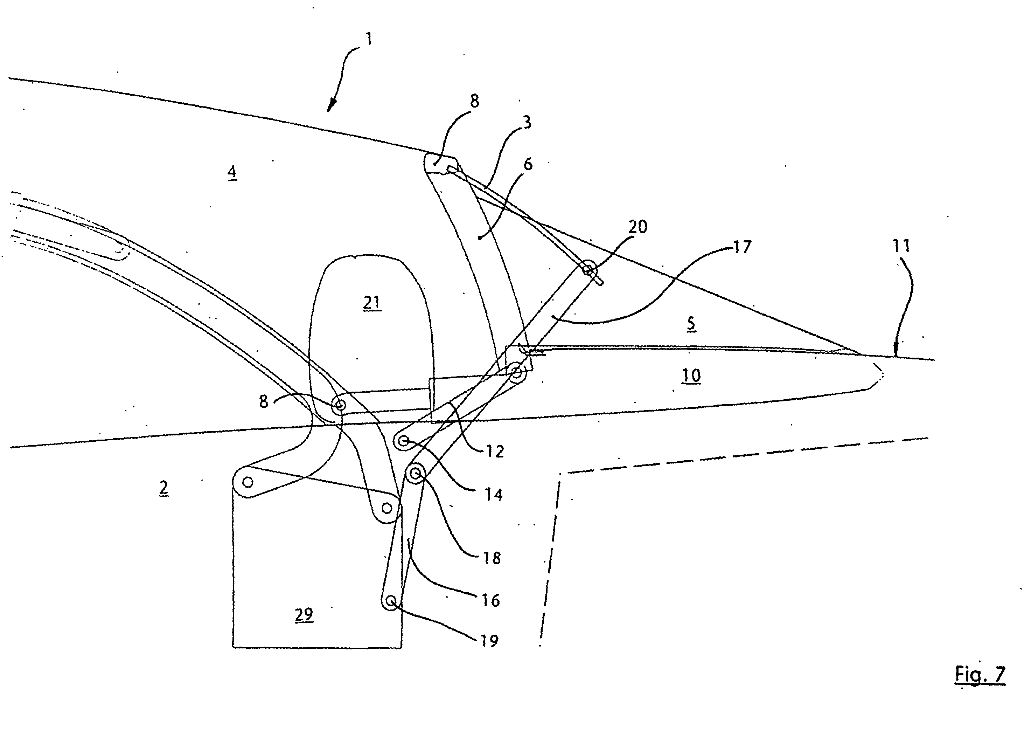

In den Figuren 6 und 7 ist das Aufschwenken der Heckscheibe 3 in geschlossener Stellung des Daches 4 dargestellt, um dadurch eine Belüftungsstellung zu erreichen. Hierbei wird nur die Schwenkhebelanordnung 15 bedient, ohne daß sonstige Öffnungs- oder Schließmechanismen des Daches ausgelöst würden. Die Bedienung der Schwenkhebelanordnung 15 kann fernausgelöst, etwa vom Armaturenbrett aus, erfolgen. Übliche Antriebselemente können hierfür vorgesehen sein. Damit ist eine zweite Steuerungsmöglichkeit des erfindungsgemäßen Daches geschaffen, bei dem die Heckscheibe 3 unabhängig vom geschlossenen Dach 4 bewegbar ist.

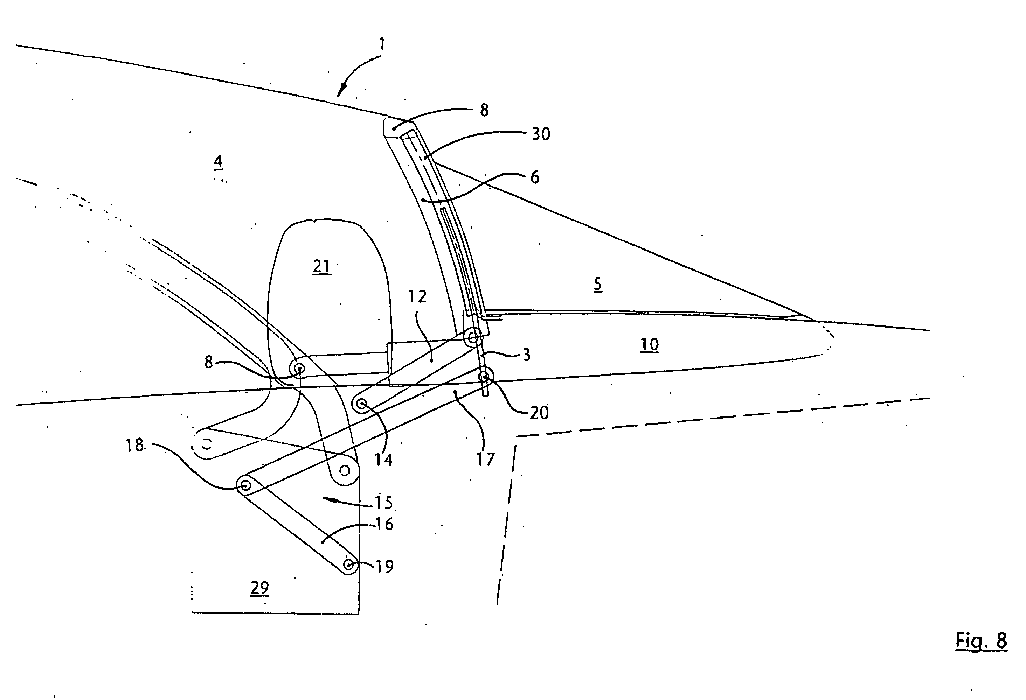

Gemäß weiteren besonders vorteilhaften Ausführungsformen (Fig. 8 bis Fig. 10) ist vorgesehen, daß die Heckscheibe 3 in geschlossener Stellung des Daches aus einer Normalstellung, in der sie das Dach 4 nach hinten abdichtet, in eine Absenkstellung verfahrbar ist, in der sie sich unterhalb der Fensterbrüstungslinie 11 der Karosserie 2 befindet und damit den rückwärtigen Ausschnitt des Daches 4 im Ausführungsbeispiel vollständig freigibt.

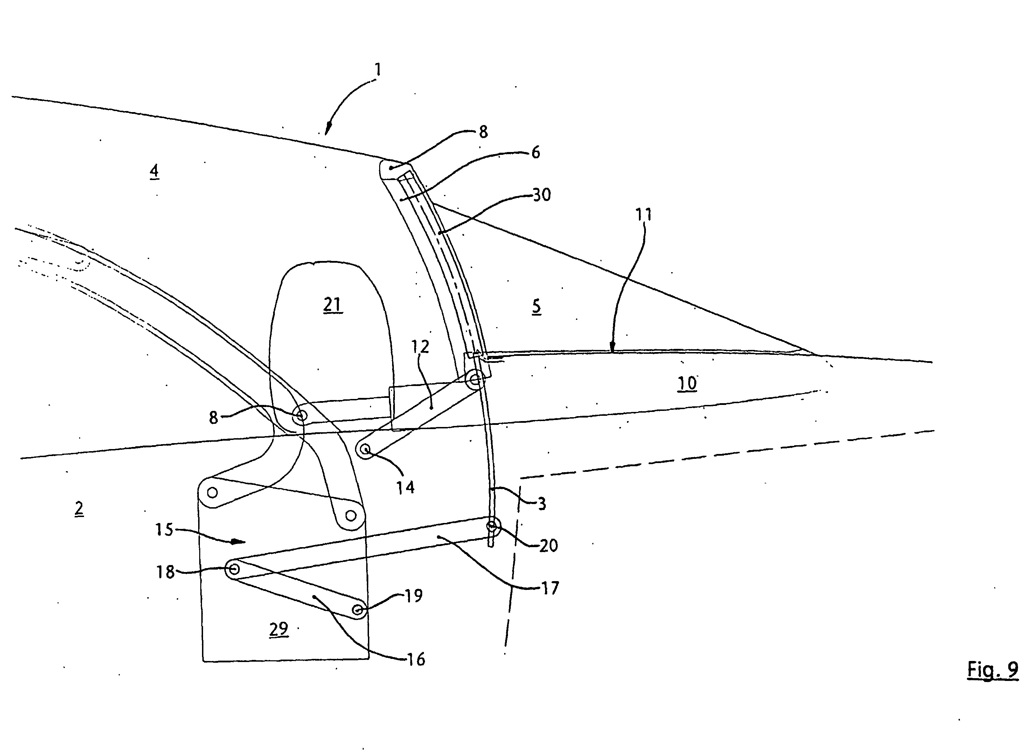

Im Ausführungsbeispiel nach den Fig. 8 und 9 erfolgt die Absenkung dadurch, daß die Schwenkhebelanordnung 15 gleichzeitig auch eine Antriebsanordnung zum Absenken der Heckscheibe 3 ausbildet, indem durch Verschwenken der Hebel 16 und 17 um die Gelenke 18 und 19 eine Abwärts- oder Aufwärtsverlagerung der Heckscheibe 3 durchgeführt wird. Die Heckscheibe 3 bleibt dabei im Rahmen 6 zumindest mit ihrem oberen Endbereich gehalten, wofür eine Gleitführung 30, etwa mit Rollen versehen, vorgesehen ist.

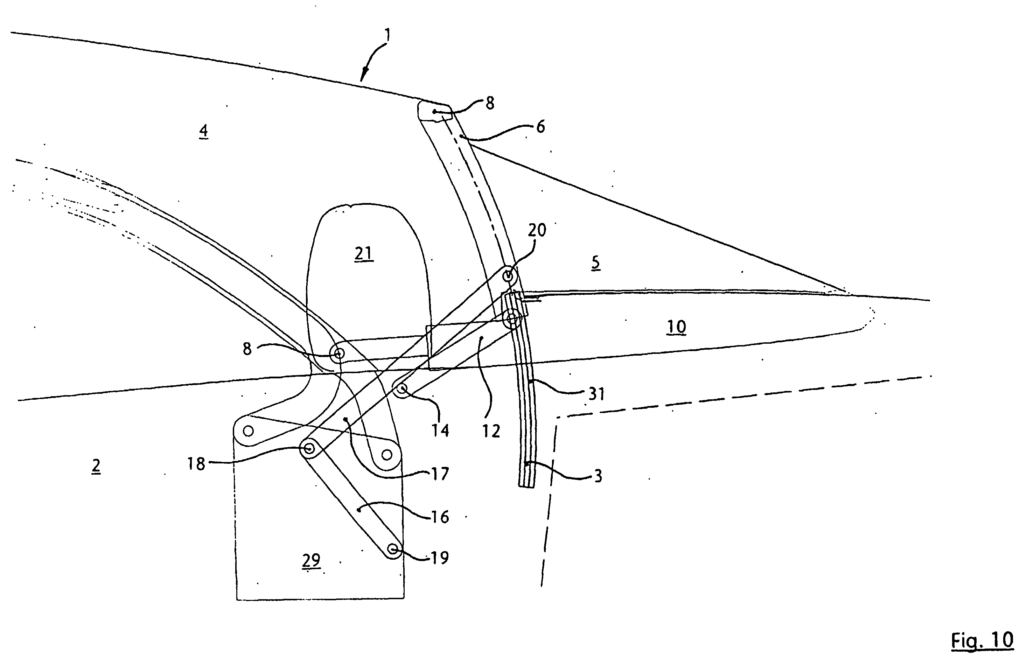

An Stelle der Antriebshebel 16 und 17 kann auch vorgesehen sein, die Führung als teleskopische Führung 31 nach Art eines Schubladenauszugs auszubilden (Fig. 10) und auch die Antriebselemente, beispielsweise elektrische oder hydraulische oder einen Seilzug, hierüber auf die Heckscheibe 3, die auch in abgesenkter Stellung frei in der Karosserie 2 hängt, einwirken zu lassen. Eine solche Lösung bietet die Möglichkeit, die Antriebselemente in den Dachbereich zu integrieren. Die Ausbildung einer teleskopischen Antriebs- und Führungseinheit 31 ist in Fig. 10 dargestellt. Hierbei bleibt auch in abgesenkter Stellung die Heckscheibe 3 im ausgezogenen Teil der Teleskopführung 31 gehalten. Die Antriebselemente wirken direkt auf die im Rahmen befindlichen Führungsteile 31 ein. Beispielsweise kann ein elektromotorisch bewegter Seilzugantrieb vorgesehen sein. Die Schwenkhebelanordnung 15 tritt hierbei nicht in Funktion.

Sie wird in diesem Ausführungsbeispiel nur zur Verschwenkung der Heckscheibe 3 während des Öffnens und Schließens des Daches 4 benötigt.

Wenn eine derartige Höhenverlagerbarkeit der Heckscheibe 3 mit vorgesehen ist, wird beim Aufschwenken der Heckscheibe 3 der Führungsteil 30 mit verschwenkt werden. Der Rahmen 6 ist dann im Querschnitt beispielsweise L-förmig ausgebildet, die Gleit- oder Teleskopführung 30,31 im Querschnitt T- oder U-förmig, so daß diese gegenüber dem Rahmen aufgeschwenkt werden kann.

## Patentansprüche

1. Cabriolet-Fahrzeug (1) mit einem auffaltbaren, mit einer Heckscheibe (3) versehenen Dach (4), das in einem rückwärtigen Fahrzeugbereich ablegbar ist und über zumindest einen Spannbügel (10) im geschlossenen Zustand gegenüber der Karosserie (2) verspannt ist, wobei der Spannbügel (10) zum Öffnen des Daches (4) nach vorne verschwenkbar ist und hierbei eine Vorwärtsverlagerung der Heckscheibe (3) bewirkt, **dadurch gekennzeichnet, daß** die Heckscheibe (3) in einem verdeckseitigen, nach unten geöffneten Rahmen (6) gehalten und während des Öffnens und Schließens des Daches (4) gegenüber diesem Rahmen (6) aufschwenkbar ist.

2. Cabriolet-Fahrzeug nach Anspruch 1, **dadurch gekennzeichnet, daß** die Aufschwenkbewegung der Heckscheibe (3) und die Öffnungs- bzw. Schließbewegung des Daches (4) miteinander gekoppelt sind.

3. Cabriolet-Fahrzeug nach einem der Ansprüche 1 oder 2, **dadurch gekennzeichnet, daß** die Heckscheibe (3) in aufgeschwenkter Stellung im Bereich des mittleren Schenkels (8) des Rahmens (6) an diesem gehalten ist und mit ihrem unteren Bereich gegenüber dem Rahmen (6) ausgestellt ist.

4. Cabriolet-Fahrzeug nach einem der Ansprüche 1 bis 3, **dadurch gekennzeichnet daß** der Rahmen (6) in geschlossener Stellung auf der Karosserie (2) im Bereich der Fensterbrüstung (3) aufsteht und während des Öffnens oder Schließens des Daches (4) in einer von dieser abhebenden Bewegungsbahn (13) geführt ist.

5. Cabriolet-Fahrzeug nach Anspruch 4, **dadurch gekennzeichnet, daß** die Führung des Rahmens (6) während des Öffnens und Schließens des Daches (4) eine Zwangsführung ist, die durch die Faltungskinematik des Daches (4) bewirkt ist.

6. Cabriolet-Fahrzeug nach einem der Ansprüche 1 bis 5, **dadurch gekennzeichnet, daß** das Dach (4) eine textile Bespannung aufweist und in seinem rückwärtigen Bereich zwei seitliche, nach hinten vorstehende, in Draufsicht im wesentlichen dreiecksförmige Endbereiche (5) umfaßt und daß die Heckscheibe (3) diesen vor- und zwischengelagert in einer annähernd vertikalen Stellung gehalten ist.

7. Cabriolet-Fahrzeug nach Anspruch 6, **dadurch gekennzeichnet, daß** die Endbereiche (5) über Spannbügel (10) gegenüber der Karosserie (2) gespannt sind.

8. Cabriolet-Fahrzeug nach einem der Ansprüche 1 bis 7, **dadurch gekennzeichnet daß** zur Bewirkung eines Aufschwenkens der Heckscheibe (3) eine Schwenkhebelanordnung (15) vorgesehen ist.

9. Cabriolet-Fahrzeug nach Anspruch 8, **dadurch gekennzeichnet, daß** sich die Schwenkhebelanordnung (15) zwischen einer dem karosserieseitigen Hauptlager (29), um das herum die Aufschwenkung des Daches (4) bewirkbar ist, zugeordneten Achse (19) und einem der Heckscheibe (3) zugeordneten Angriffspunkt (20) erstreckt.

10. Cabriolet-Fahrzeug nach einem der Ansprüche 1 bis 9, **dadurch gekennzeichnet, daß** die Heckscheibe (3) zusätzlich zumindest bereichsweise aus einer Normalstellung in eine Absenkstellung unterhalb einer die Karosserie (2) oberseitig begrenzenden Fensterbrüstungslinie (11) absenkbar ist.

11. Cabriolet-Fahrzeug nach einem der Ansprüche 1 bis 10, **dadurch gekennzeichnet, daß** in geschlossener Stellung des Daches (4) die Heckscheibe (3) in eine Belüftungsstellung aufschwenkbar ist.

## Claims

1. Convertible vehicle (1) having a foldable roof (4) which is provided with a rear window (3) and can be stowed in a rear part of the vehicle and which, in the raised stare, is tensioned relative to the bodywork (2) by means of at least one tensioning bow (10), the tensioning bow being pivotable forward to allow the roof (4) to be lowered and causing, in the course of this, a forward displacement of the rear window (3), **characterised in that** the rear window (3) is held in a frame (6) which belongs to the folding top and is open at the bottom, and can be pivoted open relative to said frame (6) during the lowering and raising of the roof (4).

2. Convertible vehicle according to claim 1, **characterised in that** the pivoting-open movement of the rear window (3) and the lowering and raising movements of the roof (4) are coupled together.

3. Convertible vehicle according to either of claims 1 and 2, **characterised in that**, in the pivoted-open position, the rear window (3) is held against the frame (6) in the region of the centre limb (8) thereof and its bottom region is moved out relative to the frame (6).

4. Convertible vehicle according to one of claims 1 to 3, **characterised in that**, in the raised position, the frame (6) stands erect on the bodywork (2) in the region of the window sill structure (3) and during the lowering or raising of the roof (4) is guided along a path of movement which lifts it off said sill structure (3).

5. Convertible vehicle according to claim 4, **characterised in that** the guidance of the frame (6) during the lowering and raising of the roof (4) is positive guidance which is produced by the kinematic mechanism for folding the roof (4).

6. Convertible vehicle according to one of claims 1 to 5, **characterised in that** the roof (4) has a textile covering and, in its rear region, comprises two lateral, rearwardly projecting end-regions (5) which are substantially triangular in plan, and **in that** the rear window (3) is held mounted in front of and between these end-regions (5) in an approximately vertical position.

7. Convertible vehicle according to claim 6, **characterised in that** the end regions (5) are tensioned relative to the bodywork (2) by means of tensioning bows (10).

8. Convertible vehicle according to one of claims 1 to 7, **characterised in that** an arrangement (15) of pivoting levers is provided to cause the pivoting open of the rear window (3).

9. Convertible vehicle according to claim 8, **characterised in that** the arrangement (15) of pivoting levers extends between an axis (19), which is associated with a main mounting (29) about which the roof (4) can be caused to pivot open, and a point of engagement (20) associated with the rear window (3).

10. Convertible vehicle according to one of claims 1 to 9, **characterised in that** the rear window (3) can, in addition, be lowered, at least in part, from a normal position to a lowered position below a window sill-line (11) which defines a top boundary of the bodywork (2).

11. Convertible vehicle according to one of claims 1 to 10, **characterised in that**, when the roof (4) is in the raised position, the rear window can be pivoted open to a ventilating position.

## Revendications

1. Véhicule cabriolet (1) comportant un toit (4) pliable, muni d'une lunette arrière (3) qui peut se ranger dans la zone arrière du véhicule, et précontraint par au moins un étrier de tension (10), à l'état fermé, à l'encontre de la carrosserie (2), dans lequel l'étrier de serrage (10) est pivotant vers l'avant pour l'ouverture du toit (4) et produit ainsi un déplacement vers l'avant de la lunette arrière (3),
**caractérisé en ce que**
la lunette arrière (3) est maintenue dans un cadre (6) côté capote, ouvert vers le bas, et est pivotante vers le haut à l'encontre de ce cadre (6) pendant l'ouverture et la fermeture du toit (4).

2. Véhicule cabriolet selon la revendication 1,
**caractérisé en ce que**
le mouvement de pivotement vers le haut de la lunette arrière (3) et le mouvement d'ouverture et de fermeture du toit (4) sont couplés l'un avec l'autre.

3. Véhicule cabriolet selon l'une des revendications 1 ou 2,
**caractérisé en ce que**
la lunette arrière (3) est maintenue, en position pivotée vers le haut dans la zone de la branche moyenne (8) du cadre (6) contre celle-ci, et sa zone inférieure est déplacée à l'encontre du cadre (6).

4. Véhicule cabriolet selon l'une des revendications 1 à 3,
**caractérisé en ce que**
le cadre (6), en position fermée, repose sur la carrosserie (2) dans la zone de l'appui (3) de la fenêtre et, pendant l'ouverture ou la fermeture du toit (4), est guidé dans une piste (13) de déplacement se soulevant de cet appui.

5. Véhicule cabriolet selon la revendication 4,
**caractérisé en ce que**
le guidage du cadre (6) est, pendant l'ouverture ou la fermeture du toit (4), un guidage forcé qui est produit par la cinématique de pliage du toit (4).

6. Véhicule cabriolet selon l'une des revendications 1 à 5,
**caractérisé en ce que**
le toit (4) présente un recouvrement textile et comprend, dans sa zone arrière, deux zones d'extrémité (5) latérales, faisant saillie vers l'arrière, sensiblement de forme triangulaire en vue de dessus, et la lunette arrière (3) est logée en avant et entre celles-ci en une position approximativement verticale.

7. Véhicule cabriolet selon la revendication 6,
**caractérisé en ce que**
les zones d'extrémité (5) sont contraintes au moyen d'étriers de tension (10) à l'encontre de la carrosserie (2).

8. Véhicule cabriolet selon l'une des revendications 1 à 7,
**caractérisé en ce qu'**
il est prévu un dispositif de leviers pivotants (15) pour produire un pivotement vers le haut de la lunette arrière (3).

9. Véhicule cabriolet selon la revendication 8,
**caractérisé en ce que**
le dispositif de leviers pivotants (15) s'étend entre un axe (19) associé au palier principal (29) côté carrosserie, autour duquel le pivotement vers le haut du toit (4) est produit, et un point de prise (20) associé à la lunette arrière (3).

10. Véhicule cabriolet selon l'une des revendications 1 à 9,
**caractérisé en ce que**
la lunette arrière (3) est en outre abaissable, au moins dans une zone, d'une position normale à une position abaissée en dessous d'une ligne (11) d'appui de fenêtre délimitant la carrosserie (2) côté supérieur.

11. Véhicule cabriolet selon l'une des revendications 1 à 10,
**caractérisé en ce que**
en position fermée du toit (4), la lunette arrière (3) est pivotante vers le haut dans une position de ventilation.
